# EUROPEAN PATENT APPLICATION

(11) **EP 2 299 520 A1**
(43) Date of publication of application: **23.03.2011**
(21) Application number: 09275128.8
(22) Date of filing: 22.12.2009
(51) Int. Cl.: H01M 2/12

(54) **Cell cap assembly with desirable safety**

(30) Priority: 31.08.2009 CN 200920193726 U
(71) Applicant: Dongguan Amperex Technology Limited, North Zone of SS1 Sci. & Tech. Industry Park Dongguan city, Guangdong 523-808 (CN); Dongguan Amperex Electronics Technology Limited, Dongguan city, Guangdong 523080 (CN)
(72) Inventor: Pei, Yi-hua, 523000 Dongguan city Guangdong (CN)
(74) Representative: Leland, Emma Clare

(57) **Abstract**

The present invention provides a cell cap assembly including a grommet defining a through hole, a stripper contact plate defining at least one gas hole securely received in the through hole, an rupture plate securely positioned in the through hole and in electrical connection with the stripper contact plate, and an end cap electrically connected with the rupture plate. The rupture plate includes an outer ring portion, a bent portion extending from the outer ring portion, and a planar recessed portion defining a recess formed at one end of the bent portion.

## Description

### CROSS-REFERENCE TO RELATED APPLICATION

The present patent invention claims priority to Chinese Patent Application No. CN 200920193726.6 filed August 31, 2009, which is incorporated by reference herein in its entirety.

### FIELD OF THE INVENTION

The present patent invention generally relates to cell cap assemblies and, more particularly, relates to a cell cap assembly with desirable safety performance.

### BACKGROUND OF THE INVENTION

Recently, with the development of science and technology, portable electronic devices, such as video cameras, laptop personal computers, portable DVDs and personal digital assistants are becoming increasingly popular in people's daily life. To meet the requirement of being convenient for carrying, desirable high-energy power source, such as lithium-ion batteries are being widely used.

High-energy batteries can supply enough energy for mobile electronic devices anytime and anywhere. However, due to the use of high-energy chemical materials and energy concentration, safety performance of high-energy batteries is not satisfactory. For instance, in charging or discharging process of lithium-ion batteries, short-circuit possibly occur due to compression, collision or other unexpected incidents, which will inevitably produce large current and, therefore, generate a lot of heat. The heat accumulation may cause the lithium-ion batteries to burn or explode and, therefore, damage the electronic devices and even injure the users.

To solve the technical problem as previously discussed, cell cap assemblies which can prevent the batteries from burning or exploding are widely used in the art. Typically, a cell cap assembly which can prevent the battery from burning or exploding generally includes an grommet defining a stepped through hole, a stripper contact plate defining at least one gas hole, an rupture plate electrically connected with the stripper contact plate via spot welding, and an end cap electrically connected with the rupture plate. The stripper contact plate, the rupture plate and the end cap are orderly and tightly received in the through hole of the grommet. In use, when short-circuit in the battery occurs due to overcharge or unsuitable operation, the expanding gas in the battery flows through the gas hole of the stripper contact plate and actuates the rupture plate to reverse upwardly. If the gas pressure achieves a predetermined pressure value, the welding spots between the rupture plate and the stripper contact plate are ruptured. The current path of the battery is cut off to prevent the battery from burning or exploding.

However, the cell cap assemblies as disclosed in the prior art at least have the following shortcoming. The stiffness of the rupture plate is not adjustable or controllable. The current path of the battery is difficult to cut off accurately when unexpected incidents occur and, therefore, the safety performance of the battery is still not desirable enough.

What is needed, therefore, is to provide a cell cap assembly having desirable safety performance which can avoid the safety accidents as previously discussed.

### SUMMARY OF THE INVENTION

One object of the present invention is to provide a cell cap assembly with desirable safety performance which can avoid safety accidents of the battery.

According to one embodiment of the present invention, a cell cap assembly includes a grommet defining a through hole, a stripper contact plate defining at least one gas hole securely received in the through hole, an rupture plate securely positioned in the through hole and electrically connected with the stripper contact plate, and an end cap electrically connected with the rupture plate. The rupture plate includes an outer ring portion, a bent portion extending from the outer ring portion and a recessed portion defining a recess formed at an end of the bent portion.

According to the embodiment of the present invention, the recess defined in the recessed portion of the rupture plate can adjust and control the stiffness of the rupture plate, such that the rupture plate can reverse controllably. When an unexpected incident occurs, the current path through the battery can be cut off quickly and accurately.

Preferably, the recess has a shape of closed circular, square, trapezoid, oval or rectangle.

Preferably, a positive temperature coefficient (PTC) is sandwiched between the rupture plate and the end cap. The PTC defines a center hole for receiving at least part of the reversed rupture plate.

Preferably, a groove is disposed adjacent the boundary area of the outer ring portion and the bent portion of the rupture plate.

Preferably, the recess and the groove are disposed concentrically.

Preferably, the end cap has an annular flange, a sidewall extending upwardly from the annular flange and a round top formed at a top of the sidewall. At least one perforation is defined in the sidewall and/or the round top.

Preferably, the rupture plate and the stripper contact plate are in electrical connection with each other via welding spots at the recessed portion, and are separated from each other by an insulative gasket at the other area.

Preferably, the bent portion of the rupture plate is provided with at least one relief groove at a central area thereof.

According to another aspect of the present invention, an rupture plate for use in a cell cap assembly includes an outer ring portion, a bent portion extending obliquely and downwardly from an internal edge of the outer ring portion, and a recessed portion defining a recess formed at an end of the bent portion.

Preferably, the recess has a shape of closed circle, square, trapezoid, rectangle or oval.

Preferably, a groove is provided adjacent the boundary area of the outer ring portion and the bent portion.

Preferably, the rupture plate is provided with at least one relief groove at a central area thereof.

Other advantages and novel features will be drawn from the following detailed description of preferred embodiments with the attached drawings. The accompanying drawings, which are incorporated in and constitute a part of this specification, illustrate embodiments of the present invention and, together with a general description of the invention given above, and the detailed description of the embodiments given below, serve to explain the principles of the invention:

### BRIEF DESCRIPTION OF THE DRAWINGS

Fig. 1 depicts a vertical sectional view of an assembled cap assembly according to one embodiment of the present invention, wherein a rupture plate thereof is in a normal state;

Fig. 2 depicts a perspective view of the rupture plate as shown in Fig. 1;

Fig. 3 depicts a perspective view of a rupture plate for use in the cap assembly as shown in Fig. 1 according to another embodiment of the present invention.

Fig. 4 depicts another vertical sectional view of the assembled cap assembly as illustrated in Fig. 1, wherein the rupture plate is in a reversed state;

Fig. 5 depicts a perspective view of the rupture plate in a reversed state as shown in Fig. 4; and

Fig. 6 depicts another perspective view of the rupture plate in a reversed state as shown in Fig. 4.

### DETAILED DESCRIPTION OF THE INVENTION

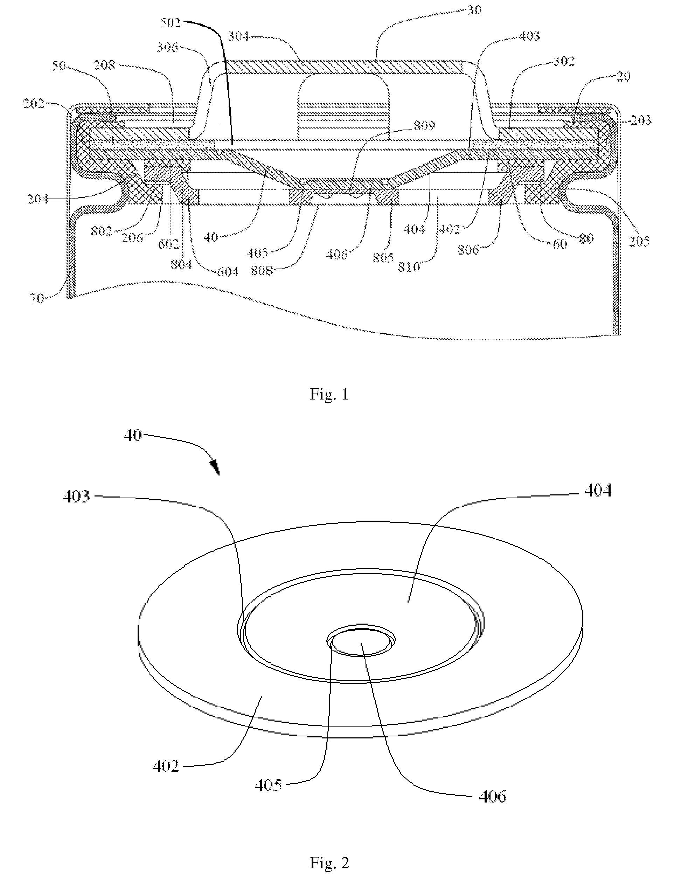

Referring to Figs. 1 to 6, a cap assembly according to one embodiment of the present invention includes a grommet 20, an end cap 30, a rupture plate 40, a positive temperature coefficient 50 (hereinafter referred as PTC), an insulative gasket 60 and a stripper contact plate 80.

The grommet 20 is substantially a hollow cylinder. Upper end of the grommet 20 having a larger diameter defines a closed end 203, and the lower end having a smaller diameter defines a holding end 205. Stepped through hole 208 is defined in the grommet 20. A first vertical wall 202, a second vertical wall 204 and a third vertical wall 206 are provided at an inner surface of the grommet 20 from upper side to lower side.

The end cap 30 is a hollow cup including an annular flange 302. An external diameter of the annular flange 302 is smaller than a diameter of the through hole 208 at the closed end 203. A sloped sidewall (not labeled) protrudes from the internal edge of the annular flange 302 upwardly and obliquely. A planar round top 304 is provided at the top of the sloped sidewall. A number of circumferentially spaced perforations 306 are defined in the sloped sidewall, or the round top 304, or both of them.

Referring particularly to Figs. 2, 3 and 5, 6, the rupture plate 40 is a round plate having a planar recessed center area. The rupture plate 40 includes an outer ring portion 402, a bent portion 404 protruding obliquely and downwardly from internal edge of the outer ring portion 402 and a planar recessed portion 406 formed at a contraction end of the bent portion 404. An annular groove 403 is defined adjacent the boundary area of the outer ring portion 402 and the bent portion 404. In use, when the gas pressure in a battery exceeds a predetermined pressure value, the rupture plate 40 will be ruptured around the annular groove 403 to release the gas pressure and ensure the safety of the battery.

The recessed portion 406 is a planar plate which defines a closed recess 405 on an upper surface facing the end cap 30. The recess 405 on the recessed portion 406 of the rupture plate 40 is preferably seated at the boundary of the bent portion 404 and the recessed portion 406. The depth of the recess 405 is adjustable, to adjust the stiffness of the rupture plate 40. The recess 405 and the groove 403 are preferably concentrically arranged. The arrangement of the recess 405 can make the stiffness of the rupture plate 40 controllable, so that the rupture plate 40 can reverse controllably. When unexpected incident occurs due to unsuitable operation, the current path through the battery can be cut off quickly and accurately.

It is noticeable that, in the embodiment of the present invention as illustrated, the recess 405 generally has a shape of closed circle. However, according to alternative embodiments of the present invention, the recess 405 may also has other shapes, such as closed square, trapezoid, rectangle or oval depending on accuracy and convenience of mechanical process. Additionally, the depth of the recess 405 is linear to the reversing pressure.

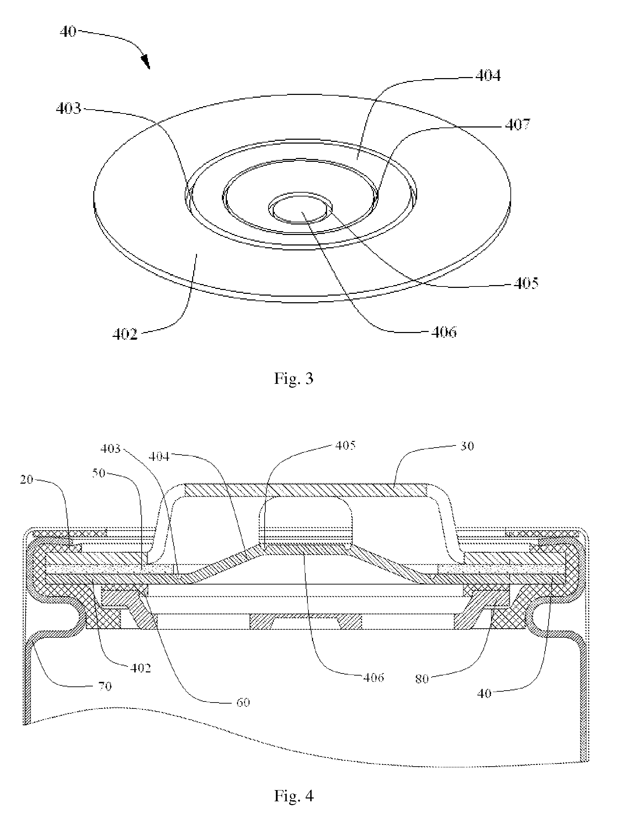

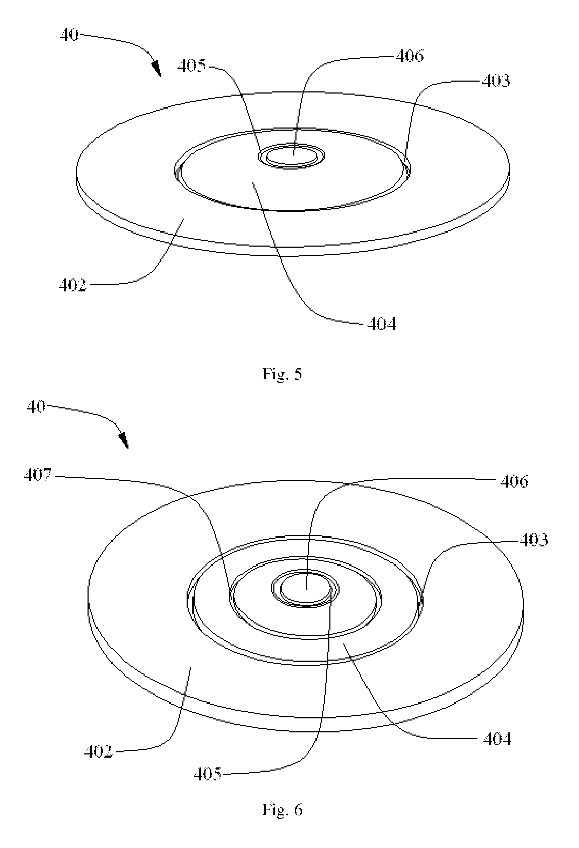

Additionally, referring particularly to Figs. 3 and 6, to make sure the rupture plate 40 can be reversed more readily under the pressure of the expanding gas inside the battery, especially for the rupture plate made from hard material, such as hard aluminum, central area of the bent portion 404 is thinner than other areas thereof. In the embodiment as illustrated, the bent portion 404 is provided with a relief groove 407 at a central area thereof.

The electrically insulative gasket 60 includes an annular main body 602. An external diameter of the main body 602 is larger than a diameter of the third vertical wall 206 but is smaller than the diameter of the second vertical wall 204 of the grommet 20. A downwardly extending side wall 604 is formed at an inner edge of the insulative gasket 60.

The stripper contact plate 80 has a shape similar to that of the end cap 30 and is formed with a ring portion 802, a connection portion 804 extending downwardly and obliquely from the ring portion 802 and a wafer 805 formed on a contraction end of the connection portion 804. External diameter of the ring portion 802 is equal to or slightly smaller than the external diameter of the insulative gasket 60. A depression 808 is defined in a lower surface of the wafer 805, so that a disconnection portion 809 having a smaller thickness is formed. At least one gas holes 810 are defined in the wafer 805.

To further improve the safety performance of the battery, a PTC 50 is disposed between the rupture plate 40 and the end cap 30. The PTC 50 is a flat ring plate having a center hole 502 in a center thereof. The center hole 502 has a diameter slightly lager than an external diameter of the bent portion 404 of the rupture plate 40. When the rupture plate 40 is reversed under the pressure of the gas in the battery, the bent portion 404 and part of the recessed portion 406 of the rupture plate 40 are received in the center hole 502 of the PTC 50.

In assembly, the insulative gasket 60 is set on the ring portion 802 of the stripper contact plate 80. The side wall 604 of the insulative gasket 60 abuts against an inner edge of the ring portion 802 of the stripper contact plate 80, to prevent the stripper contact plate 80 from being movable relative to the insulating gasket 60. The recessed portion 406 of the rupture plate 40 and the disconnection portion 809 of the stripper contact plate 80 are in electrical connection with each other by spot welding. The welded rupture plate 40 and the stripper contact plate 80 are received in the through hole 208 of the grommet 20. Thereafter, the PTC 50 and the end cap 30 are assembled on the rupture plate 40 in order.

Please referring to Figs. 1 and 3, in nipping process, the closed end 203 of the grommet 20 is deformed under the pressure of the housing 70. The first vertical wall 202 of the closed end 203 presses the upper surface of the annular flange 302 of the end cap 30 tightly. The rupture plate 40, the PTC 50 and the end cap 30 are mounted tightly and electrically connected to each other safely. The battery cell (not shown) is safely sealed off in the housing 70.

During charging or discharging, if short-circuit occurs in the battery and the temperature of the battery rises, the expanding gas in the battery will flow through the gas hole 810 of the stripper contact plate 80 into the space between the stripper contact plate 80 and the rupture plate 40. When the gas pressure in the battery exceeds a predetermined pressure value, the bent portion 404 and the recessed portion 406 of the rupture plate 40 are urged to deform upwardly. As the ring portion 802 of the stripper contact plate 80, the main body 602 of the insulative gasket 60 and the outer ring portion 402 of the rupture plate 40 abutting against one another tightly, the disconnection portion 809 of the stripper contact plate 80 or the welding spots between the rupture plate 40 and the stripper contact plate 80 are ruptured. The current path of the battery is then cut off. If the pressure of the expanding gas is large enough, the rupture plate 40 will reverse and be ruptured at the groove 403. The gas flows through the perforation 306 of the end cap 30 to prevent the battery from burning or exploding.

According to the embodiments of the present invention as previously detailed, the recess 405 defined in the recessed portion 406 of the rupture plate 40 can adjust the stiffness of the rupture plate 40 and, thus, the rupture plate 40 can reverse controllably. When an unexpected incident occurs, the current path through the battery can be cut off quickly and accurately.

While the present invention has been illustrated by the above description of the preferred embodiments thereof, while the preferred embodiments have been described in considerable detail, it is not intended to restrict or in any way limit the scope of the appended claims to such details. Additional advantages and modifications within the spirit and scope of the present invention will readily appear to those ordinary skilled in the art. Consequently, the present invention is not limited to the specific details and the illustrative examples as shown and described.

## Claims

1. A cell cap assembly, comprising:
a grommet defining a through hole;
a stripper contact plate defining at least one gas hole securely received in the through hole;
a rupture plate securely positioned in the through hole and electrically connected with the stripper contact plate, the rupture plate comprising an outer ring portion, a bent portion extending from the outer ring portion, and a recessed portion formed at an end of the bent portion; and
an end cap electrically connected with the rupture plate,
**characterized in that** the recessed portion is provided with a recess.

2. The cell cap assembly of claim 1, **characterized in that** the recess has a shape of closed circle, square, trapezoid, rectangle or oval.

3. The cell cap assembly of claim 1 or 2, **characterized in that** a positive temperature coefficient is seated between the rupture plate and the end cap, the positive temperature coefficient defines a center hole for receiving the reversed rupture plate.

4. The cell cap assembly of one of claims 1 to 3, **characterized in that** a groove is defined adjacent the boundary area of the outer ring portion and the bent portion of the rupture plate.

5. The cell cap assembly of one of claims 1 to 4, **characterized in that** the recess and the groove are concentrically disposed.

6. The cell cap assembly of one of claims 1 to 5, **characterized in that** the end cap comprises an annular flange, a sidewall extending upwardly from the annular flange and a round top formed at a top of the sidewall, and at least one perforation is defined in the sidewall and/or the round top.

7. The cell cap assembly of one of claims 1 to 6, **characterized in that** the rupture plate and the stripper contact plate are electrically connected with each other by welding spots at the recessed portion, and are separated from each other by an insulative gasket at the other area.

8. The cell cap assembly of one of claims 1 to 7, **characterized in that** the bent portion of the rupture plate defines at least one relief groove at a central area thereof.

9. The cell cap assembly of one of claims 1 to 8, **characterized in that** the recess provided on the recessed portion of the rupture plate is seated at the boundary of the bent portion and the recessed portion.

10. A rupture plate for use in a cell cap assembly, comprising:
an outer ring portion;
a bent portion extending downwardly and obliquely from an internal edge of the outer ring portion; and
a recessed portion formed at an end of the bent portion,
**characterized in that** the recessed portion is provided with a recess.

11. The rupture plate of claim 10, **characterized in that** the recess has a shape of closed circle, square, trapezoid, rectangle or oval.

12. The rupture plate of claim 10 or 11, **characterized in that** a groove is defined adjacent boundary area of the outer ring portion and the bent portion.

13. The rupture plate of one of claims 10 to 12, **characterized in that** the bent portion is provided with at least one relief groove at a central area thereof.

14. The rupture plate of one of claims 10 to 13, **characterized in that** the center area of the bent portion is thinner than the other area thereof.

15. The rupture plate of one of claims 10 to 14, **characterized in that** the recess is defined at the boundary of the recessed portion and the bent portion, and the depth of the recess is adjustable.
